# EUROPÄISCHE PATENTSCHRIFT

(11) **EP 0 865 893 B1**
(45) Veröffentlichungstag und Bekanntmachung des Hinweises auf die Patenterteilung: **25.09.2002**
(21) Anmeldenummer: 98103999.3
(22) Anmeldetag: 06.03.1998
(51) Int. Cl.: B29C 44/38

(54) **Verfahren und Vorrichtungen zur Herstellung von mit Schaumstoffen gedämmten Rohren**
Method and apparatus for producing pipes with foam insulation
Procédé et dispositif pour fabriquer un tuyau d'une enveloppe isolante en mousse

(30) Priorität: 17.03.1997 DE 19711068
(43) Veröffentlichungstag der Anmeldung: 23.09.1998
(73) Patentinhaber: BASF AKTIENGESELLSCHAFT, 67056 Ludwigshafen (DE)
(72) Erfinder: Schmiade, Werner, 49459 Lembruch (DE)

(56) Entgegenhaltungen:
- DE-A- 2 257 661
- US-A- 3 439 075
- US-A- 4 522 578

## Beschreibung

Die Erfindung bezieht sich auf ein Verfahren zur Herstellung von gedämmten Rohren gemäß den Oberbegriff des Anspruch 1.

Außerdem bezieht sich die Erfindung auf eine für dieses Verfahren besonders geeignete Halterung gemäß dem Oberbegriff des unabhängigen Anspruch 4. Ein solches Verfahren und eine solche Halterung werden in der US 3 439 075 offenbart.

Die kontinuierliche und diskontinuierliche Herstellung von gedämmten, d.h. isolierten Rohren, die unter anderem in der Fernwärmeindustrie Verwendung finden, ist allgemein bekannt und beispielhaft aus der Firmenschrift der Hüting GmbH (Heft 5/96, Seiten 30-33, Hüting GmbH, Heidelberg, Deutschland) beschrieben.

Üblicherweise werden bei den diskontinuierlichen Verfahren Mischungen zur Herstellung von Polyurethanhartschaumstoffen in den auszufüllenden Raum zwischen einem zu isolierenden inneren Rohr, das im Folgenden auch Mediumrohr genannt wird, und einem äußeren Rohr, das zum Schutz und zur Stabilisierung des gedämmten Mediumrohres dient, mit hohem Druck und großer Förderleistung eingebracht. Nachteilig wirken sich bei diesen Verfahren die hohen Anforderungen an die Mischungen, die ausreichend dünnflüssig sein müssen, aus.

Bei bekannten kontinuierlichen Verfahren können die Mischungen zur Herstellung der Hartschäume auf das Mediumrohr aufgetragen werden, wobei anschließend während des Schäumprozesses als äußeres Rohr, im Folgenden auch als Mantelrohr bezeichnet, beispielsweise eine Folie verwendet wird. Es ist des Weiteren bekannt, die Mischungen zur Herstellung der Hartschäume auf die Folie aufzutragen und darin das Mediumrohr einzubetten. Nachteilig bei diesen Verfahren wirkt sich der hohe Aufwand an Apparaten aus, da während des Schäumprozesses die Rohre ein Druckband durchlaufen müssen, damit die Folien dem Druck, der durch den Schäumprozeß entsteht, standhalten. Des Weiteren ist die Verarbeitung insbesondere von Meldedrähten, die innerhalb des Schaumes verlaufen, aufwendig.

Ziel der vorliegenden Erfindung war es, ein Verfahren zur Herstellung von mit Schaumstoffen gedämmten Rohren mit im Schaumstoff verlaufenden Leitungen zu entwickeln, mit dem bei geringem apparativen Aufwand und niedrigen Anforderungen an die Fließeigenschaften der Mischungen gedämmte Rohre mit hervorragenden Eigenschaften hergestellt werden können.

Diese Aufgabe konnte ein Verfahren gemäß Anspruch 1 durch gelöst werden, sowie durch eine für dieses Verfahren besonders geeignete Halterung gemäß Anspruch 4.

Dabei befindet sich das Mediumrohr in dem Lumen des parallel verlaufenden Mantelrohres, das zum Schutz des gedämmten Mediumrohres dienen kann, wobei der Abstand zwischen dem Mediumrohr und dem Mantelrohr bevorzugt konstant über die Länge der Rohre ist.

Die Halterung, die während des Austragens der Mischungen zwischen dem Mediumrohr und dem Mantelrohr positioniert wird, ist ringförmig und axial beweglich ausgebildet, beispielsweise durch üblicherweise 2 bis 10, bevorzugt 3 bis 6 Radlager, beispielsweise Rollen, und/oder Kugellager an der inneren Kante der Halterung, die mit dem Mediumrohr in Kontakt steht und üblicherweise 2 bis 10, bevorzugt 3 bis 6 Rollen und/oder Kugellager an der äußeren Kante der Halterung, die mit dem Mantelrohr in Kontakt steht. Die Halterung steht bevorzugt durch Kugellager und/oder Rollen in Kontakt sowohl zu dem Mediumrohr als auch zu dem äußeren Rohr und kann somit als Abstandshalter zwischen dem inneren und dem äußeren Rohr das Mediumrohr in dem äußeren Mantelrohr positionieren. Auf Abstandshalter, die bei bekannten Verfahren benötigt werden, kann somit bei dem erfindungsgemäßen Verfahren verzichtet werden.

Die Mischung, die durch mindestens eine Öffnung, bevorzugt 1 bis 6 Öffnungen der Halterung ausgetragen werden kann, wird bei dem erfindungsgemäßen Verfahren in den zu befüllenden Raum zwischen das innere Rohr (Mediumrohr) und das äußere Rohr (Mantelrohr) ausgetragen. Die Öffnungen können beliebig in der Halterung positioniert werden, wobei vorzugsweise die axiale und radiale Beweglichkeit der Halterung zwischen dem Mediumrohr und dem Mantelrohr durch die Positionierung nicht behindert werden sollte. Bewegt werden kann während des Austragens der Mischung sowohl die Halterung zwischen Mantel- und Mediumrohr als auch die Rohre relativ zu der Halterung durch übliche Verfahren, beispielsweise durch Zugketten, hydraulisch durch Stangen oder weitere, bekannte Verfahren.

Vor dem Austragen der Mischung in den Raum zwischen dem Mediumund dem Mantelrohr wird vorzugsweise an dem Ende der Rohre, an dem die Austragung beginnen soll, zumindest der Zwischenraum, in den die Mischung gefüllt werden soll, durch übliche Kappen oder Abdichtungen so verschlossen, das die Mischung nicht aus dem Zwischenraum auslaufen kann. Bevorzugt befindet sich die Halterung zu Beginn des Eintragens der Mischung nahe dem Ende der Rohre, an dem der Zwischenraum beispielsweise durch die üblichen Kappen verschlossen ist. Während des Eintragens der Mischungen wird die Halterung bevorzugt axial in die Richtung der Rohrenden bewegt, an dem der Zwischenraum nicht verschlossen ist.

Des Weiteren enthält die Halterung mindestens eine Öffnung (8), an denen gegebenenfalls Mischköpfe beispielsweise durch Verschrauben befestigt werden können, zum Austragen von Mischungen in den Zwischenraum zwischen (4) und (7).

Erfindungsgemäß ist die Halterung mindestens zweiteilig ausgebildet, wobei sie mindestens ein erstes Teil (1) enthält, das an dem Medium- oder dem Mantelrohr anliegt und das in Bezug auf das Rohr nicht radial beweglich ausgebildet ist, und mindestens ein weiteres Teil (2) enthält, das dem jeweils anderen Rohr radial beweglich anliegt und mit dem ersten Teil (1) radial beweglich, beispielsweise durch Kugellager, verbunden ist. Diese Ausbildung erlaubt, Leitungen, beispielsweise Meldedrähte (13), in den zu verschäumenden Raum zwischen Mediumrohr und Mantelrohr zu verlegen. Diese Meldedrähte (13) werden durch eine oder mehrere Öffnungen (3) des ersten Teils (1) bei dem Befüllen des zu verschäumenden Raumes verlegt. Da das erste Teil (1) vorzugsweise in Bezug auf die Rohre (4) und (7) radial unbeweglich ist, bleibt die Position der Öffnung (3) in dem ersten Teil (1), durch das die Meldedrähte geführt werden, in einem konstanten Winkel zu dem Medium- und dem Mantelrohr. Ein Verdrehen der Meldedrähte in Bezug zu den Rohren kann somit auch dann ausgeschlossen werden, wenn man die Rohre im Verhältnis zu dem weiteren Teil (2), das die Öffnungen (8), durch die die Mischungen ausgetragen werden, enthält, rotiert. Die Halterung ist bevorzugt ringförmig ausgebildet.

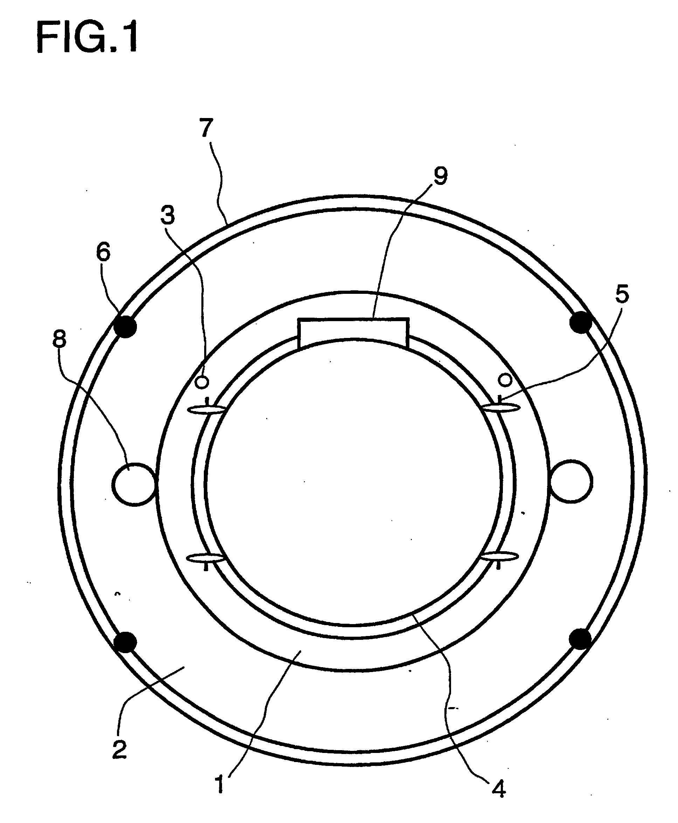

Eine besonders vorteilhafte Ausgestaltung der Halterung ist beispielhaft in der Figur 1 dargestellt und soll im Folgenden näher beschrieben werden. Die Halterung ist ringförmig aus einem inneren Ring (1), der an dem Mediumrohr (4) durch Radlager (5) axial beweglich anliegt und einem äußeren Ring (2) aufgebaut. Der äußere Ring (2) ist mit (1) drehbar, d.h. radial beweglich verbunden und weist zudem Kugellager (6) auf, so daß (2) zwischen Mediumrohr (4) und Mantelrohr (7) axial und radial beweglich angeordnet ist. Der Ring (2) weist des Weiteren die Öffnungen (8), an denen beispielsweise Mischköpfe beispielsweise durch Verschrauben befestigt werden können, zum Austragen von Mischungen auf das Mediumrohr bzw. in den Zwischenraum zwischen (4) und (7) auf. Die Öffnungen können, wie bereits dargestellt, beliebig in den Ring (2) positioniert werden, wobei vorzugsweise die axiale und gegebenenfalls radiale Beweglichkeit der Halterung zwischen dem Mediumrohr und dem Mantelrohr durch die Positionierung nicht behindert werden sollte. Der Ring (1) enthält die Öffnung(en) (3), durch die beispielsweise Meldedrähte geführt und in dem Zwischenraum zwischen (4) und (7) verlegt werden können. Der Ring (1) kann des Weiteren an der Kontaktfläche mit (4) Aussparungen (9) aufweisen, bevorzugt wenn an (4) ein Kabelkasten, der axial an (4) verläuft, angeordnet ist.

Beispielsweise können das Mantel- und Mediumrohr auf einer drehbaren Unterlage, beispielsweise einem Drehteller stehen und in vertikaler Position mit der Mischung von oben befüllt werden. Bevorzugt sind das Mediumrohr und das äußere Rohr vertikal angeordnet, wobei man die Mischung über die am unteren Ende der Rohre angeordnete Halterung von oben zuführt. Es ist auch möglich, die Rohre liegend in Bezug auf die Halterung zu rotieren, beispielsweise durch Rollen, auf denen die Rohre liegend positioniert sind. Bevorzugt kann da bei eine zweiteilig ausgebildete Halterung wie eingangs beschrieben als Abstandshalter und als Halter zum Austragen der Mischungen verwendet werden.

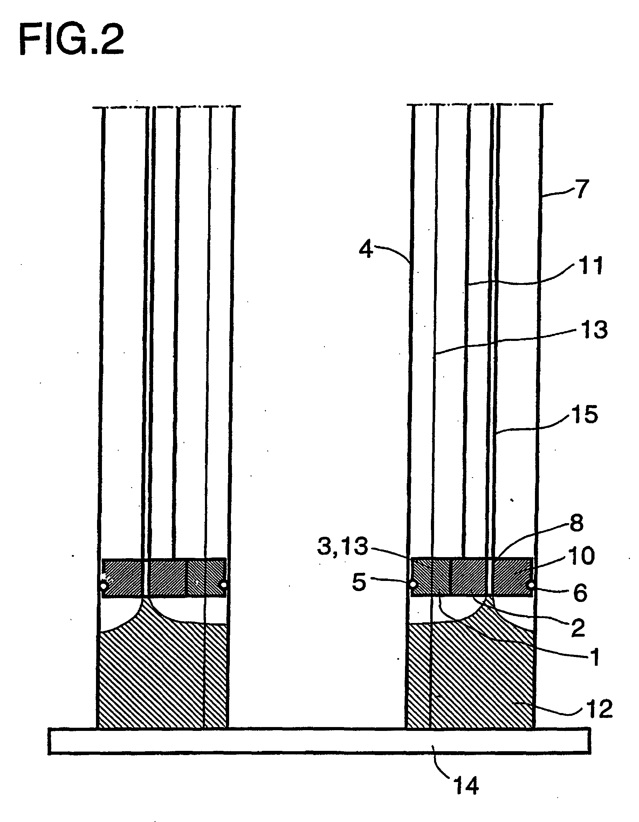

Eine Anordnung der Halterung zwischen einem vertikal ausgerichteten Medium- und Mantelrohr und das Auftragen der Mischungen ist beispielhaft in Figur 2 dargestellt, wobei die Numerierung in den Figuren 1 und 2 identisch erfolgte. Die beispielsweise zweiteilige Halterung (10) bestehend aus (1) und (2), die miteinander beispielsweise durch ein Kugellager drehbar verbunden sind, ist zwischen (4) und (7) aufgrund der Rollen bzw. Kugellager (5) und (6) axial beweglich angeordnet. Durch übliche Anordnungen (11) zum Bewegen von (10), beispielsweise durch Zugketten oder hydraulische Einrichtungen, wird (10) während des Austragens der Mischungen (12) durch die Öffnungen (8) in der Halterung (10) zwischen (4) und (7) aufwärts bewegt. Während des Auftragens der Mischung können Meldedrähte (13) durch die Öffnung(en) (3) in den Raum zwischen (4) und (7) verlegt werden. (4) und (7) können durch Rotation des Drahtellers (14) in Bezug auf auf (2) rotieren, wobei (1) sich in gleicher Winkelgeschwindigkeit mit (4) und (7) bewegt, da (5) in Form von Rollen und nicht wie (6) als Kugellager ausgebildet ist. (1) und (2) sind, beispielsweise durch Kugellager, derart miteinander verbunden, daß (1) und (2) sich durch (11) axial zwischen (4) und (7) bewegen lassen und (1) in Bezug auf (2) eine Drehbewegung ausführen kann, d.h. mit den Rohren in gleicher Geschwindigkeit rotieren kann. Die Zuleitung der aufzutragenden Mischungen kann durch beispielsweise Rohre (15) aus einer üblichen Förderapparatur, beispielsweise einem bekannten Puromat® der Elastogran GmbH, Lemförde, erfolgen.

Bei dem Auftragen der Mischung durch die Halterung auf das Mediumrohr bzw. in den Zwischenraum zwischen Medium- und Mantelrohr können das Medium- und Mantelrohr bevorzugt in gleicher Winkelgeschwindigkeit in Bezug auf mindestens einen Teil der Halterung (2), der die öffnungen (8) zum Austragen der Mischungen enthält, rotieren. Die Rotationsbewegung kann sowohl durch ein Drehen der Rohre als auch durch ein Drehen der Halterung durch bekannte Verfahren verursacht werden.

Das Mediumrohr und das Mantelrohr können sowohl gekrümmt als auch bevorzugt gerade ausgebildet sein.

Das Mediumrohr bzw. die Kombination aus dem Mantelrohr und dem darin parallel ausgerichteten Mediumrohr können sich sowohl in horizontaler Position als auch bevorzugt in vertikaler Position befinden, wenn die Mischungen durch die Halterung auf das Mediumrohr bzw. in den Zwischenraum zwischen das Medium- und das Mantelrohr ausgebracht wird. Sind die Rohre vertikal ausgerichtet, so wird die Mischung bevorzugt von oben in den Zwischenraum gefüllt, wobei besonders bevorzugt die Halterung während der Austragung der Mischung entlang des Mediumrohres nach oben bewegt wird. Die Geschwindigkeit, mit der sich die Halterung in Bezug auf die Rohre bewegt, ist abhängig von Mischungsmenge, die pro Zeit ausgetragen wird, dem Raum, der mit der Mischung ausgefüllt werden soll und beispielsweise der Reaktivität der Mischung, d.h. mit welcher Geschwindigkeit die Mischung beispielsweise verschäumt. Beispielsweise kann bei einem Durchmesser des Mediumrohres von 1000 mm, einem Durchmesser des Mantelrohres von 1200 mm, einer Austragsleistung der Mischung beispielsweise bei Förderung durch einen Puromat® 80, Elastogran GmbH, Lemförde, von 936 g/sec die Geschwindigkeit, mit der die Halterung relativ zu den Rohren bewegt wird, 5 m/min betragen. Die Länge der Röhre kann besonders bei einer horizontalen Orientierung der Rohre nahezu beliebig gewählt werden, wobei das Mediumrohr bevorzugt eine größere Länge als das Mantelrohr aufweist. Nach dem Befüllen der Mischung in den Raum zwischen das Mediumrohr und das Mantelrohr wird die Halterung üblicherweise entfernt. Die erfindungsgemäß gedämmten Rohre können nach der Umsetzung der Mischungen zu den Schaumstoffen in allgemein bekannter Weise bearbeitet werden und finden beispielsweise als Leitungen für flüssige oder gasförmige Medien, die gegen die Umgebungstemperatur isoliert werden sollen, beispielsweise in der Fernwärmeindustrie, Verwendung.

Die Mischungen zur Herstellung von Polyisocyanat-Polyadditionsprodukten, beispielsweise von Polyurethanhartschaumstoffen, können durch die Öffnungen in der Halterung auf das Mediumrohr bzw. in den Zwischenraum zwischen das Mediumrohr und das Mantelrohr ausgetragen werden. Bevorzugt kann an den Öffnungen ein üblicher Mischkopf, wie er allgemein zum Austragen von Mischungen zur Herstellung von Polyurethanen verwendet wird, an der Halterung derart angebracht werden, das die Mischung erfindungsgemäß durch die Öffnungen der Halterung ausgetragen werden kann. Je nach Abmessung der Rohre können ein oder mehr Mischköpfe verwendet werden. Auf eine ausreichende Vermischung der einzelnen Komponenten der Mischung vor dem Auftrag sollte vorzugsweise geachtet werden, wobei die Komponenten beispielsweise aus der Polyurethanchemie z.B. aus der Herstellung von Hartschaumstoffen allgemein bekannt sind. Die Förderung der Mischung zu den Mischköpfen kann durch allgemein bekannte und üblicher Apparate erfolgen, beispielsweise durch Hochdruck- oder Niederdruckproportionspumpen, wo sie nach dem Auftragen auf das Mediumrohr zu Polyisocyanat-Polyadditionsprodukten umgesetzt werden.

Die Halterung kann aus allgemein üblichen Materialien, beispielsweise bekannten Kunststoffen und/oder bevorzugt Metall, beispielsweise Stahl bestehen. Die ringförmige Halterung kann zur Materialeinsparung beispielsweise Löcher, Aussparungen an den Kanten oder dergleichen aufweisen, wobei diese Maßnahmen die erfindungsgemäße Verwendung der Halterung vorzugsweise nicht behindern sollten. Die Dicke der Halterung kann weitgehend beliebig gewählt werden, wobei vorzugsweise eine ausreichende Festigkeit der Halterung und vorzugsweise eine ausreichende Positionierung des Mediumsrohres in dem Mantelrohr erreicht werden sollte. Üblicherweise beträgt die Dicke der Halterung 3 bis 300 mm, je nach den Abmessungen des Mediumrohres und des Mantelrohres.

Das Mantelrohr kann ebenso wie die Halterung aufgebaut sein aus beispielsweise üblichen Kunststoffen, beispielsweise Polypropylen, Polyethylen, PVC und/oder Metallen, beispielsweise Stahl. Bevorzugt ist das Mantelrohr aus thermoplastisch verarbeitbaren Materialien gefertigt, so daß eine thermisches Verformen und ein thermisches Verschweißen des Mantelrohres ermöglicht wird. Beispielsweise kann das Mantelrohr auch aus mineralischem Material bestehen, wie Beton, Ton, Glas etc.

Das Mediumrohr kann ebenfalls aus üblichen Materialien gefertigt sein, beispielsweise allgemein bekannten Kunststoffen, und/oder Metallen.

Der Durchmesser des Mediumrohres kann üblicherweise zwischen 5 mm und 2000 mm betragen, bevorzugt 50 mm bis 1500 mm. Das Mantelrohr weist entsprechend einen größeren Durchmesser als das Mediumrohr auf. Der Durchmesser des Mantelrohres, der bei vorgegebenen Durchmesser des Mediumrohres die Dicke des Zwischenraumes zwischen den Rohren determiniert, ist abhängig von den Anforderungen an den isolierend wirkenden Schaumstoff in dem Zwischenraum und kann dementsprechend angepaßt werden. Üblicherweise beträgt der Abstand zwischen dem Medium- und dem Mantelrohr, d.h. die Dicke der Zwischenschicht, 25 bis 1000 mm.

Als Mischungen können allgemein Mischungen verwendet werden, die zur Herstellung von Schaumstoffen, die als Isolationsmaterial dienen können, geeignet sind. Diese Schaumstoffe können beispielsweise sein: Phenolharzschäume, Epoxydharzschäume, Melaminharzschäume. Bevorzugt setzt man Mischungen zur Herstellung von Polyisocyanat-Polyadditionsprodukten, besonders bevorzugt Mischungen zur Herstellung von Hartschaumstoffen auf der Basis von Polyisocyanat-Polyadditionsprodukten ein. Die Zusammensetzung dieser Mischungen zur Herstellung von Polyisocyanat-Polyadditionsprodukten, beispielsweise Hartschaumstoffen ist allgemein bekannt und beispielsweise in EP-B 421 269 beschrieben. Die zu verwendenden Mischungen können besonders bevorzugt zu solchen Hartschaumstoffen verarbeitet, d.h. verschäumt werden, die die Anforderungen nach der Europäischen Norm EN 253 für die Anwendung in der Fernwärmeindustrie erfüllen. Die Umsetzung der Mischungen zu Schaumstoffen enthaltend Polyisocyanat-Polyadditionsprodukte kann wie allgemein bekannt erfolgen.

Es kann von Vorteil sein, die Oberfläche des Mediumrohres und des Mantelrohres, die mit den aufzutragenden Mischungen in Kontakt kommen, durch allgemein bekannte Verfahren, beispielsweise Coronabehandlung, so vorzubereiten, daß die Mischungen, auch beispielsweise nach einer Verschäumung der Mischungen, an den Oberflächen der Rohre haften bleiben.

Auch kann es von Vorteil sein, vor dem Eintrag der Mischungen das Medium und/oder Mantelrohr vorzuwärmen. Dieses kann z.B. bei metallischen Rohren durch induktive Heizung oder bei nichtmetallischen Rohren durch Infrarotstrahlung oder vorgewärmte Luft geschehen.

Besondere Vorteile ergeben sich durch das erfindungsgemäße Verfahren dadurch, daß
- keine weiteren Abstandshalter zusätzlich zu der Halterung benötigt werden,
- keine hohen Ansprüche an die Fließfähigkeit der Mischungen gestellt, d.h. auch Mischungen mit einer hohen Viskosität verarbeitet werden können, da
- die Mischungen nicht mit einem hohen Druck in den Zwischenraum zwischen Medium- und Mantelrohr gespritzt werden müssen,
- kein Druckband benötigt wird,
- keine hohen Anforderungen an die Stabilität des Mantelrohres gestellt wird, da bei einer vertikalen Orientierung der Röhre der Schaum bei der Verschäumung in dem Zwischenraum zwischen Mantel- und Mediumrohr senkrecht aufsteigen kann und
- Meldedrähte sowie Kabelkästen, die beispielsweise eine Begleitheizung enthalten können, einfach zu verlegen sind.
- Zudem wird durch das erfindungsgemäße Verfahren eine sehr homogene Verschäumung erreicht, die durch bekannte Verfahren insbesondere bei der diskontinuierlichen Fertigung nur schwierig erreicht werden kann.

## Patentansprüche

1. Verfahren zur Herstellung von mit Schaumstoffen gedämmten Rohren, wobei man
a) zwischen einem inneren Mediumrohr (4) und einem dazu parallel angeordneten äußeren Mantelrohr (7) eine Halterung vorsieht, die mit mindestens einer Öffnung (8) versehen ist und die axial beweglich angebracht ist und das Mediumrohr (4) im Mantelrohr (7) positioniert ist und
b) über die Öffnung (en) (8) der Halterung eine Mischung zur Herstellung von Schaumstoffen in den Hohlraum zwischen beiden Rohren (4, 7) einbringt, wobei man
b1) während des Einbringens der Mischung die Halterung axial in Bezug zu dem Mantelrohr (7) und dem Mediumrohr (4) bewegt, dann
c) nach erfolgter Eintragung die Mischung zum Schaumstoff umsetzt und
d) die Halterung und gegebenenfalls das Mantelrohr (7) entfernt,
**dadurch gekennzeichnet, daß**
die Halterung mindestens zweiteilig ausgebildet ist, wobei sie mindestens ein erstes Teil (1) enthält, das an dem Medium- oder dem Mantelrohr anliegt und das in Bezug auf das Rohr nicht radial beweglich ausgebildet ist, und mindestens ein weiteres Teil (2) enthält, das an dem jeweils anderen Rohr radial beweglich anliegt und mit dem ersten Teil (1) radial beweglich verbunden ist,
und daß man Leitungen durch eine oder mehrere Öffnungen (3) des ersten Teils (1) bei dem Befüllen des zu verschäumenden Raumes verlegt.

2. Verfahren nach Anspruch 1, **dadurch gekennzeichnet, daß** das Mediumrohr (4) und das Mantelrohr (7) vertikal angeordnet sind und man die Mischung über die am unteren Ende der Rohre (4, 7) angeordnete Halterung von oben zuführt.

3. Verfahren nach einem der Ansprüche 1 bis 2, **dadurch gekennzeichnet, daß** man das Mantelrohr (7) und das Mediumrohr (4) mit gleicher Winkelgeschwindigkeit in Bezug auf die Halterung rotiert.

4. Halterung, die ringförmig ausgebildet ist, an den inneren Kanten des Ringes sowie an den äußeren Kanten des Ringes Radund/oder. Kugellager aufweist und somit axial beweglich zwischen einem inneren Mediumrohr (4) und einem äußeren Mantelrohr (7) anliegen und das Mediumrohr im Mantelrohr (7) positionieren kann, und eine oder mehrere Öffnungen (8) zum Austragen von Mischungen in den Zwischenraum zwischen dem Mediumrohr (4) und dem Mantelrohr (7) aufweist,
**dadurch gekennzeichnet, daß** die Halterung mindestens zweiteilig ausgebildet ist mit mindestens
(i) einem ersten Ring (1), der durch Radlager (5) axial beweglich an dem Mediumrohr (4), anliegen kann, eine oder mehrere Öffnungen (3) aufweist, durch die leitungen beispielsweise Meldedrähte, geführt und in dem Zwischenraum zwischen dem Mediumrohr (4) und dem Mantelrohr (7) verlegt werden können, sowie an der Kontaktfläche mit dem Mediumrohr (4) Aussparungen (9) aufweisen kann,
sowie mit mindestens
(ii) einem zweiten Ring (2), der mit dem ersten Ring (1) drehbar, d.h. radial beweglich verbunden ist und zudem Kugellager (6) aufweist, so daß der zweite Ring (2) zwischen dem ersten Ring (1) und dem Mantelrohr (7) axial und radial beweglich angeordnet ist, und des Weiteren Öffnungen (8) zum Austragen von Mischungen auf das Mediumrohr (4) bzw. in den Zwischenraum zwischen den Mediumrohr (4) und dem Mantelrohr (7) aufweist.

## Claims

1. A process for producing pipes insulated with foams, where
a) between an inner carrier pipe (4) and an outer jacket pipe (7) arranged parallel thereto, a holder is provided and has at least one aperture (8) and has been mounted so that it can be moved axially, and the carrier pipe (4) has been positioned in the jacket pipe (7) and
b) a mixture for the preparation of foams is introduced into the vacant space between the two pipes (4, 7) via the aperture(s) (8) in the holder, where
b1) during the introduction of the mixture, the holder is moved axially with respect to the jacket pipe (7) and the carrier pipe (4), and then
c) after the mixture has been charged, it is reacted to give the foam, and
d) the holder and, where appropriate, the jacket pipe (7) are removed,
which comprises using a holder which has at least two parts and comprises at least one first part (1) which fits the carrier pipe or the jacket pipe and is not movable radially with respect to the pipe, and comprises at least one further part (2) which fits the respective other pipe in a manner which allows radial movement and which has been connected to the first part (1) in a manner which allows radial movement, and comprises laying lines through one or more apertures (3) in the first part (1) when the space to be foamed is being filled.

2. A process as claimed in claim 1, wherein the carrier pipe (4) and the jacket pipe (7) have been arranged vertically, and the mixture is fed from above via the holder arranged at the lower end of the pipe (4, 7).

3. A process as claimed in claim 1 or 2, wherein the jacket pipe (7) and the carrier pipe (4) are rotated with the same angular velocity with respect to the holder.

4. A ring-shaped holder which has rolling and/or ball bearings on the inner edges of the ring and on the outer edges of the ring and thus can fit between an inner carrier pipe (4) and an outer jacket pipe (7) in a manner which allows axial movement and can position the carrier pipe in the jacket pipe (7), and has one or more apertures (8) for distributing mixtures into the intermediate space between the carrier pipe (4) and the jacket pipe (7),
wherein the holder has at least two parts, with at least
(i) one first ring (1) which, by means of rolling bearings (5), can be fitted to the carrier pipe (4) in a manner which allows axial movement, and has one or more apertures (3) through which lines, such as signal wires, can be passed and can be laid in the intermediate space between the carrier pipe (4) and the jacket pipe (7), and may also have recesses (9) at the surface of contact with the carrier pipe (4),
and also with at least
(ii) one second ring (2) which has been connected with the first ring (1) in such a way that it can be turned, i.e. is capable of moving radially, and which moreover has ball bearings (6), so that the second ring (2) has been arranged between the first ring (1) and the jacket pipe (7) with the capability to move axially and radially, and which furthermore has apertures (8) for distributing mixtures onto the carrier pipe (4) and/or into the intermediate space between the carrier pipe (4) and the jacket pipe (7).

## Revendications

1. Procédé de préparation de tubes isolés avec des mousses dans lequel
a) on prévoit un support entre un tube interne à milieu. (4) et un tube enveloppe (7) disposé parallèlement à celui-ci, lequel support est pourvu d'au moins une ouverture (8) et qui est monté de façon mobile axialement, et le tube à milieu (4) est disposé dans le tube enveloppe (7) et
b) on introduit par l' (les) ouverture(s) (8) du support, un mélange pour préparer des mousses dans l'espace creux entre les deux tubes (4, 7), où
b1) pendant l'introduction du mélange, on déplace le support axialement par rapport au tube enveloppe (7) et au tube à milieu (4), ensuite
c) après introduction réussie, on convertit le mélange en mousse et
d) on retire le support et éventuellement le tube enveloppe (7),
**caractérisé en ce que**
le support est consitué au moins en deux parties, celui-ci contenant au moins une première partie (1) qui est appliquée contre le tube à milieu ou le tube enveloppe et qui est constituée de façon non mobile radialement par rapport au tube, et contenant au moins une partie (2) supplémentaire qui est appliquée de façon mobile radialement contre l'autre tube respectif et qui est reliée de façon radialement mobile à la première partie (1),
**en ce que** l'on pose des conduites à travers une ou plusieurs ouvertures (3) de la première partie (1) lors du remplissage de l'espace à garnir de mousse.

2. Procédé selon l'une quelconque des revendications 1 à 3, **caractérisé en ce que** le tube à milieu (4) et le tube enveloppe (7) sont disposés verticalement, **en ce que** l'on introduit le mélange par le haut par l'intermédiaire du support disposé à l'extrémité inférieure des tubes (4, 7).

3. Procédé selon l'une quelconque des revendications 1 à 2, **caractérisé en ce que** l'on fait tourner le tube enveloppe (7) et le tube à milieu (4) avec la même vitesse angulaire par rapport au support.

4. Support qui est constitué en forme d'anneau, présente des roulements à galet et/ou à billes sur les bords internes de l'anneau ainsi que sur les bords externes de l'anneau, et qui peut être ainsi appliqué de manière mobile axialement entre un tube interne à milieu (4), et un tube enveloppe (7) externe et qui peut disposer le tube à milieu dans le tube enveloppe (7) et qui présente une ou plusieurs ouvertures (8) pour extraire des mélanges dans l'espace intermédiaire entre le tube à milieu (4) et le tube enveloppe (7), **caractérisé en ce que**, le support est constitué au moins en deux parties, ayant au moins
(i) un premier remière anneau (1) qui peut être appliqué contre le tube à milieu (4) de façon mobile axialement au moyen d'un roulement à galet (5), présente une ou plusieurs ouvertures (3), par lesquelles des conduites, par exemple des fils de signalisation, peuvent être introduites et posées dans l'espace intermédiaire entre le tube à milieu (4) et le tube enveloppe (7), et qui peut présenter des évidements neufs au niveau de la surface de contact avec le tube à milieu (4),
et avec au moins
(ii) un deuxième anneau (2) qui est relié au premier anneau (1) de façon à pouvoir tourner, qu'il est relié, c.à d. radialement mobile, et qui en outre présente un roulement à billes (6) de sorte que le deuxième anneau(2) est disposé de façon mobile axialement et radialement entre le premier ère anneau (1) et le tube enveloppe (7), et présente de surcroît des ouvertures (8) pour extraire des mélanges, sur le tube à milieu (4), respectivement dans l'espace intermédiaire entre le tube à milieu (4) et le tube enveloppe (7).
